# EUROPEAN PATENT APPLICATION

(11) **EP 4 755 949 A1**
(43) Date of publication of application: **10.06.2026**
(21) Application number: 24849281.1
(22) Date of filing: 02.08.2024
(51) Int. Cl.: C08G 83/00, C08L 101/00

(54) **DEGRADABLE CROSSLINKING AGENT**

(30) Priority: 02.08.2023 JP 2023126329
(71) Applicant: NAGASE CHEMTEX CORPORATION, Osaka-shi, Osaka 550-8668 (JP)
(72) Inventor: KURUSHIMA, Yasunori, Tatsuno-shi, Hyogo 679-4124 (JP)
(74) Representative: Klöckner, Christoph
(86) International application number: PCT/JP2024/027648
(87) International publication number: WO 2025/028636

(57) **Abstract**

The present invention aims to provide a degradable cross-linking agent that has high solvent solubility and is less likely to cause curing defects. The present invention relates to a degradable cross-linking agent including a compound represented by the following formula (1), wherein n ≥ 0, k ≥ 0, and m ≥ 0; R₁, R₂, and R₃ each independently contain, at its terminal, at least one reactive functional group selected from the group consisting of a hydroxyl group, an amino group, a hydrazide group, a thiol group, an isoprenyl group, a crotonamide group, a crotonate group, a carboxylic acid, an acid anhydride group, a vinyl group, an allyl group, an acrylate group, a methacrylate group, an acrylamide group, a methacrylamide group, a hydroxysilyl group, an epoxy group, an oxetane group, an oxazoline group, an isocyanate group, a carbodiimide group, a methylol group, a silanol group, and an alkoxysilyl group, and also contain a single bond, a group containing a siloxane structure, or a hydrocarbon group optionally containing a substituent or a heteroatom; A₁ to A₈ each independently represent a carbonyl group or a single bond, at least one of A₁ and A₂ is a carbonyl group, at least one of A₃ and A₄ is a carbonyl group, at least one of A₅ and A₆ is a carbonyl group, and at least one of A₇ and A₈ is a carbonyl group; and each Z independently represents a group containing a siloxane structure or a hydrocarbon group optionally containing a heteroatom, and wherein (a) when n = 0, R₁ and R₂ are different; (b) when n ≥ 1 and k = 0, (b-1) R₁ and R₂ are different, and/or (b-2) there is at least one Z having an asymmetric structure; and (c) when n ≥ 1 and k ≥ 1, (c-1) at least one of R₁, R₂, and R₃ is different, and/or (c-2) there is at least one Z having an asymmetric structure.

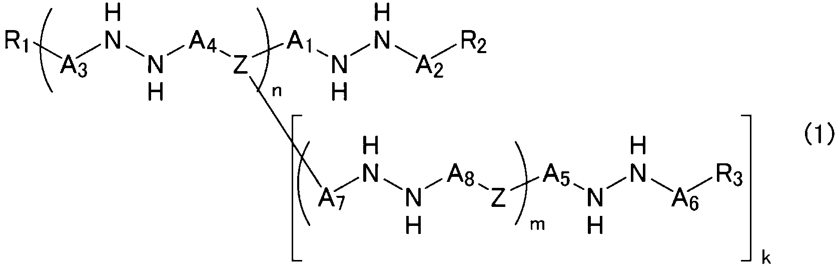

## Description

### TECHNICAL FIELD

The present invention relates to a degradable cross-linking agent.

### BACKGROUND ART

Plastic products are utilized across diverse fields, including daily necessities, automobiles, and electronic devices, owing to their formability, durability, and lightweight properties. However, they present the problem of poor degradability after disposal. In recent years, degradable polymers, which are easily degradable, have been developed for global environmental protection.

Patent Literatures 1 to 3 disclose polymers having a diacylhydrazine structure as degradable polymers. These polymers are stable in the air due to the presence of the diacylhydrazine structure, while they are rapidly degraded when reacted with oxidizing agents such as sodium hypochlorite. Patent Literatures 4 and 5 disclose that compounds with a hydrazine structure can be used as pharmaceuticals.

### CITATION LIST

### - Patent Literature

Patent Literature 1: JP 2011-236381 A
Patent Literature 2: WO 2021/131003
Patent Literature 3: JP 2011-052075 A
Patent Literature 4: WO 00/35917
Patent Literature 5: WO 2014/071247

### SUMMARY OF INVENTION

### - Technical Problem

The diacylhydrazine compounds used as raw materials for the polymers described in Patent Literatures 1 and 2 and the diacylhydrazine-containing polymers described in Patent Literature 3 are poorly soluble in solvents and therefore are likely to cause precipitation of crystals before curing, which may result in curing defects in some cases. Moreover, even those with relatively high solvent solubility are only soluble in high-boiling-point aprotic polar solvents or strong acids, and therefore a large amount of energy is required in the step of removing the solvent to obtain a formed product. This causes the problem of significant environmental loads. Patent Literatures 4 and 5 do not suggest the usability of the compounds with a hydrazine structure as cross-linking agents, their degradability through reaction with oxidizing agents, or their solubility in organic solvents.

The present invention aims to provide a degradable cross-linking agent that has high solvent solubility and is less likely to cause curing defects.

### - Solution to Problem

The present inventor has found that a cross-linking agent including a hydrazine derivative with a specific structure has high solvent solubility and a reduced likelihood of curing defects. Based on this finding, the present invention has been completed.

Specifically, the present invention relates to a degradable cross-linking agent, including a compound represented by the following formula (1): 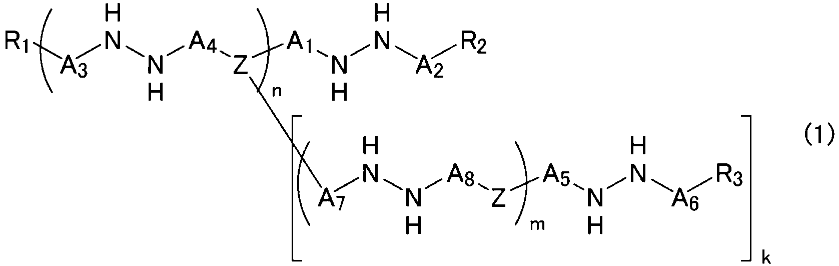 wherein
- n ≥ 0, k ≥ 0, and m ≥ 0;
- R₁, R₂, and R₃ each independently contain, at its terminal, at least one reactive functional group selected from the group consisting of a hydroxyl group, an amino group, a hydrazide group, a thiol group, an isoprenyl group, a crotonamide group, a crotonate group, a carboxylic acid, an acid anhydride group, a vinyl group, an allyl group, an acrylate group, a methacrylate group, an acrylamide group, a methacrylamide group, a hydroxysilyl group, an epoxy group, an oxetane group, an oxazoline group, an isocyanate group, a carbodiimide group, a methylol group, a silanol group, and an alkoxysilyl group, and also contain a single bond, a group containing a siloxane structure, or a hydrocarbon group optionally containing a substituent or a heteroatom;
- A₁ to A₈ each independently represent a carbonyl group or a single bond, at least one of A₁ and A₂ is a carbonyl group, at least one of A₃ and A₄ is a carbonyl group, at least one of A₅ and A₆ is a carbonyl group, and at least one of A₇ and A₈ is a carbonyl group; and
- each Z independently represents a group containing a siloxane structure or a hydrocarbon group optionally containing a heteroatom, and
wherein
(a) when n = 0, R₁ and R₂ are different,
(b) when n ≥ 1 and k = 0,
   at least one of the following conditions is satisfied:
   (b-1) R₁ and R₂ are different, and
   (b-2) there is at least one Z having an asymmetric structure, and
(c) when n ≥ 1 and k ≥ 1,
   at least one of the following conditions is satisfied:
   (c-1) at least one of R₁, R₂, and R₃ is different, and
   (c-2) there is at least one Z having an asymmetric structure.

Preferably, in the degradable cross-linking agent, R₁, R₂, and R₃ are different from each other.

Preferably, in the degradable cross-linking agent, the reactive functional groups in R₁, R₂, and R₃ are the same.

Preferably, in the degradable cross-linking agent, n ≥ 1, there is at least one Z having an asymmetric structure, and R₁, R₂, and R₃ are the same.

Preferably, in the degradable cross-linking agent, n ≥ 1, and each Z has an asymmetric structure.

Preferably, in the degradable cross-linking agent, n ≥ 1, each Z has a symmetric structure, and the reactive functional groups in R₁, R₂, and R₃ are the same.

Preferably, in the degradable cross-linking agent, the reactive functional groups in R₁, R₂, and R₃ are classified into mutually different classification groups selected from the following classification groups (A) to (O):
(A) a hydroxyl group;
(B) an amino group, a hydrazide group;
(C) a thiol group;
(D) an isoprenyl group, a crotonamide group, a crotonate group;
(E) a carboxylic acid;
(F) an acid anhydride group;
(G) a vinyl group, an allyl group;
(H) an acrylate group, a methacrylate group, an acrylamide group, a methacrylamide group;
(I) a hydroxysilyl group;
(J) an epoxy group, an oxetane group;
(K) an oxazoline group;
(L) an isocyanate group;
(M) a carbodiimide group;
(N) a methylol group; and
(O) a silanol group, an alkoxysilyl group.

Preferably, in the degradable cross-linking agent, the reactive functional groups in R₁, R₂, and R₃ are each classified into any one of the following classification groups (A) to (O), and at least two of the reactive functional groups in R₁, R₂, and R₃ are classified into the same classification group:
(A) a hydroxyl group;
(B) an amino group, a hydrazide group;
(C) a thiol group;
(D) an isoprenyl group, a crotonamide group, a crotonate group;
(E) a carboxylic acid;
(F) an acid anhydride group;
(G) a vinyl group, an allyl group;
(H) an acrylate group, a methacrylate group, an acrylamide group, a methacrylamide group;
(I) a hydroxysilyl group;
(J) an epoxy group, an oxetane group;
(K) an oxazoline group;
(L) an isocyanate group;
(M) a carbodiimide group;
(N) a methylol group; and
(O) a silanol group, an alkoxysilyl group.

Preferably, the degradable cross-linking agent is liquid at 30°C to 60°C.

The present invention also relates to a composition, containing:
the degradable cross-linking agent, and
at least one selected from the group consisting of a curable resin, a polymerization initiator, and a solvent.

The present invention also relates to a degradable cross-linked product, formed from the composition.

Preferably, the degradable cross-linked product is degradable with an oxidizing agent.

The present invention also relates to a method for degrading a degradable cross-linked product, including bringing the degradable cross-linked product into contact with an aqueous solution containing an oxidizing agent at 100°C or lower.

### - Advantageous Effects of Invention

The degradable cross-linking agent of the present invention has high solvent solubility and is less likely to cause curing defects.

### DESCRIPTION OF EMBODIMENTS

### <<Degradable cross-linking agent>>

The degradable cross-linking agent of the present invention includes a compound represented by the following formula (1):

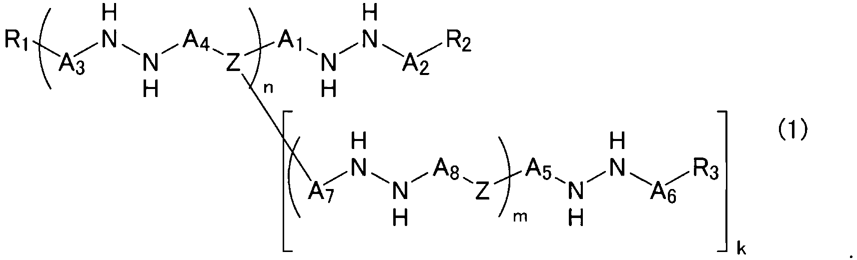

In formula (1), n, m, k, R₁, R₂, R₃, and Z are as follows:
- n ≥ 0, k ≥ 0, and m ≥ 0;
- R₁, R₂, and R₃ each independently contain, at its terminal, at least one reactive functional group selected from the group consisting of a hydroxyl group, an amino group, a hydrazide group, a thiol group, an isoprenyl group, a crotonamide group, a crotonate group, a carboxylic acid, an acid anhydride group, a vinyl group, an allyl group, an acrylate group, a methacrylate group, an acrylamide group, a methacrylamide group, a hydroxysilyl group, an epoxy group, an oxetane group, an oxazoline group, an isocyanate group, a carbodiimide group, a methylol group, a silanol group, and an alkoxysilyl group, and also contain a single bond, a group containing a siloxane structure, or a hydrocarbon group optionally containing a substituent or a heteroatom;
- A₁ to A₈ each independently represent a carbonyl group or a single bond, at least one of A₁ and A₂ is a carbonyl group, at least one of A₃ and A₄ is a carbonyl group, at least one of A₅ and A₆ is a carbonyl group, and at least one of A₇ and A₈ is a carbonyl group; and
- each Z independently represents a group containing a siloxane structure or a hydrocarbon group optionally containing a heteroatom.

It should be noted that although the term "cross-linking agent" may narrowly refer to a chemical substance capable of forming a chemical bond between polymers or within a polymer, the term as used herein refers not only to a chemical substance capable of forming a chemical bond between polymers or within a polymer but also to a chemical substance capable of forming a chemical bond between the molecules of the chemical substance itself.

### <n, m, and k in formula (1)>

In formula (1), n and m both represent 0 or more and are each independently preferably 1 or more, more preferably 2 or more. When n is 1 or more, the degradable cross-linking agent can exhibit enhanced degradability due to the presence of two or more hydrazine-derived structures (-A-NH-NH-A-). The upper limits of n and m may each be, but not limited to, 50 or less.

In formula (1), k is 0 or more, preferably 1 or more, more preferably 2 or more. When k is 1 or more, the degradable cross-linking agent of the present invention enables three-dimensional cross-linking. The upper limit of k may be, but not limited to, 50 or less.

### <R₁, R₂, and R₃ in formula (1)>

R₁, R₂, and R₃ each independently contain a reactive functional group at its terminal and also contain a single bond, a group containing a siloxane structure, or a hydrocarbon group optionally containing a substituent or a heteroatom.

R₁ to R₃ can be represented by the following formula (2):

Pⱼ-Qⱼ (2).

R₁ satisfies j = 1, R₂ satisfies j = 2, and R₃ satisfies j = 3. Pⱼ is the reactive functional group in R₁ to R₃, and Qⱼ is the single bond, siloxane structure-containing group, or hydrocarbon group in R₁ to R₃. The reactive functional group Pⱼ is bonded to the hydrazine-derived structure (-A-NH-NH-A-) via the single bond, siloxane structure-containing group, or hydrocarbon group Qⱼ.

The reactive functional group Pⱼ is at least one selected from the group consisting of a hydroxyl group, an amino group, a hydrazide group, a thiol group, an isoprenyl group, a crotonamide group, a crotonate group, a carboxylic acid, an acid anhydride group, a vinyl group, an allyl group, an acrylate group, a methacrylate group, an acrylamide group, a methacrylamide group, a hydroxysilyl group, an epoxy group, an oxetane group, an oxazoline group, an isocyanate group, a carbodiimide group, a methylol group, a silanol group, and an alkoxysilyl group. An optimal one can be selected therefrom depending on the application or process.

The numbers of reactive functional groups Pⱼ in R₁, R₂, and R₃ are each 1 or more and are each independently preferably 1 to 4, more preferably 1 to 2. When the number is 2 or more, three-dimensional cross-linking can be facilitated, resulting in cross-linked products with enhanced strength and reliability.

R₁, R₂, and R₃ may each independently contain two or more reactive functional groups Pⱼ. When two or more reactive functional groups Pⱼ are present, various types of curable resins and cross-linking processes can be selected for such a cross-linking agent. Moreover, only a specific reactive functional group may be involved in a cross-linking reaction, and the reactive functional groups not involved in the cross-linking reaction may contribute to enhancing other physical properties such as adhesiveness or solubility. When the number of reactive functional groups Pⱼ is 1, the degradation rate tends to be enhanced.

The number of carbon atoms in the hydrocarbon group Qⱼ is preferably 1 to 600, more preferably 1 to 100, still more preferably 1 to 20, from the standpoint of the strength of the cross-linked product. The hydrocarbon group Qⱼ is a saturated or unsaturated hydrocarbon group and may have a linear, branched, or cyclic structure.

The hydrocarbon group Qⱼ may have a substituent. Specific examples of the substituent include an alkoxy group, a phenoxy group, a halogen atom, an amino group, a sulfo group, a cyano group, and a nitro group.

The hydrocarbon group Qⱼ may contain a heteroatom. When a heteroatom is present, the number thereof is preferably 1 to 300, more preferably 1 to 100, still more preferably 1 to 10. The heteroatom may be present on the main chain or side chain of the hydrocarbon group Qⱼ. Examples of the heteroatom include N, S, O, and P. Examples of a heteroatom-containing structure in the hydrocarbon group Qⱼ include: -NH-, 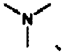 -O-, 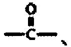 -S-, -SO₂-,

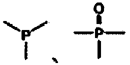

Specific examples of the hydrocarbon group Qⱼ include linear hydrocarbons such as methylene, ethylene, propylene, butylene, pentylene, hexylene, heptylene, octylene, nonylene, ethers, urethanes, ureas, esters, thioethers, carbonates, and amides; branched hydrocarbons such as isopropylene, isobutylene, 2,2-dimethylpropylene, and 2-ethyl-2-methylpropylene; cyclic hydrocarbons such as cyclohexylene, cyclopentylene, norbomenylene, phenylene, and naphthylene; and PEG chains, as well as trivalent or tetravalent groups corresponding to the foregoing groups. The hydrogen atoms in these hydrocarbon groups may be replaced by any of the substituents mentioned above.

The siloxane structure-containing group Qⱼ is a divalent or higher-valent group. The siloxane structure-containing group contains a -Si-O- bond, and may have a linear, branched, or cyclic structure. The number of silicon atoms in the siloxane structure-containing group is preferably 2 to 300, more preferably 2 to 100, still more preferably 2 to 20.

The hydrogen atom bonded to the silicon atom may be substituted. Specific examples of such a substituent include an alkyl group, an alkoxy group, a phenoxy group, a halogen atom, an amino group, a sulfo group, a cyano group, and a nitro group.

Specific examples of the siloxane structure-containing group Qⱼ include dimethyl silicone, diethyl silicone, ethyl methyl silicone, and polymethylsilsesquioxane, as well as modified silicones obtained by modifying a hydrocarbon group at the terminal and/or side chain of any of the foregoing groups to incorporate a heteroatom such as N, S, O, or P.

R₁, R₂, and R₃ may be the same as or different from each other. Specific embodiments in which R₁, R₂, and R₃ are different from each other include the following three embodiments:
- R₁, R₂, and R₃ are different in terms of both the terminal reactive functional group and the single bond, siloxane structure-containing group, or hydrocarbon group;
- R₁, R₂, and R₃ are the same in terms of the terminal reactive functional group, but are different in terms of the single bond, siloxane structure-containing group, or hydrocarbon group; and
- R₁, R₂, and R₃ are different in terms of the terminal reactive functional group, but are the same in terms of the single bond, siloxane structure-containing group, or hydrocarbon group.

When R₁, R₂, and R₃ are different from each other, enhanced solvent solubility tends to be ensured.

When R₁ to R₃ each contain two or more reactive functional groups, the phrase "the reactive functional groups in R₁, R₂, and R₃ are different" means that the reactive functional groups are not completely identical. Preferably, there are no identical reactive functional groups.

In cases where n ≥ 1 and k ≥ 2, for example, where k R₃ groups are defined as R₃₋₁, R₃₋₂, ..., and R₃₋ₖ, the phrase "R₁, R₂, and R₃ are different from each other" as used herein means that R₁, R₂, and at least one of R₃₋₁, R₃₋₂, ..., and R₃₋ₖ are different from each other. Preferably, all of R₁, R₂, R₃₋₁, R₃₋₂, ..., and R₃₋ₖ are different from each other. The phrase "R₁, R₂, and R₃ are the same" means that R₁, R₂, and at least one of R₃₋₁, R₃₋₂, ..., and R₃₋ₖ are the same. Preferably, all of R₁, R₂, R₃₋₁, R₃₋₂, ..., and R₃₋ₖ are the same. The phrase "the reactive functional groups in R₁, R₂, and R₃ are the same" means that the reactive functional groups in R₁, R₂, and at least one of R₃₋₁, R₃₋₂, ..., and R₃₋ₖ are the same. Preferably, all the reactive functional groups in R₁, R₂, R₃₋₁, R₃₋₂, ..., and R₃₋ₖ are the same. The numbers of R₁ or R₂ groups in the compound represented by formula (1) may each be, but not limited to, two or more. When two or more R₁ or R₂ groups are present, the identicalness for R₁ or R₂ can be determined in the same manner as for R₃.

When the reactive functional groups in R₁, R₂, and R₃ are the same, the cross-link density tends to be easily enhanced through a single cross-linking process. In particular, when R₁, R₂, and R₃ are different from each other, but the reactive functional groups in R₁, R₂, and R₃ are the same, the solvent solubility tends to be enhanced and enhanced cross-link density tends to be ensured through a single cross-linking process.

### <Structure for enhancing solvent solubility>

The degradable cross-linking agent of the present invention has high solvent solubility owing to the following features (a) to (c) in formula (1):
(a) when n = 0, R₁ and R₂ are different;
(b) when n ≥ 1 and k = 0,
   (b-1) R₁ and R₂ are different, and/or
   (b-2) there is at least one Z having an asymmetric structure; and
(c) when n ≥ 1 and k ≥ 1,
   (c-1) at least one of R₁, R₂, and R₃ is different, and/or
   (c-2) there is at least one Z having an asymmetric structure.

The features that R₁ and R₂ are different; that at least one of R₁, R₂, and R₃ is different; and that there is at least one Z having an asymmetric structure each make the structure of the degradable cross-linking agent complex so as to suppress crystallization, thereby contributing to enhanced solvent solubility.

In addition to the features (a) to (c), R₁, R₂, and R₃ may be different from each other. In this case, the structure of the degradable cross-linking agent becomes complex, thereby facilitating the enhancement of solvent solubility.

In addition to the features (a) to (c), the reactive functional groups in R₁, R₂, and R₃ may be the same. Furthermore, optionally, n ≥ 1, there is at least one Z having an asymmetric structure, and R₁, R₂, and R₃ are the same. In this case, the cross-link density can be easily enhanced through a single crosslinking process.

In addition to the features (a) to (c), optionally, n ≥ 1 and each Z has an asymmetric structure. In this case, the solvent solubility can be easily enhanced.

In addition to the features (a) to (c), optionally, n ≥ 1, each Z has a symmetric structure, and the reactive functional groups in R₁, R₂, and R₃ are the same. In this case, the siloxane structure-containing groups or hydrocarbon groups in R₁, R₂, and R₃ are preferably different. Thus, the solvent solubility can be enhanced and, at the same time, the cross-link density can be enhanced through a single crosslinking process.

The reactive functional groups in R₁, R₂, and R₃ can each independently be classified into a classification group selected from the following classification groups (A) to (O):
(A) a hydroxyl group;
(B) an amino group, a hydrazide group;
(C) a thiol group;
(D) an isoprenyl group, a crotonamide group, a crotonate group;
(E) a carboxylic acid;
(F) an acid anhydride group;
(G) a vinyl group, an allyl group;
(H) an acrylate group, a methacrylate group, an acrylamide group, a methacrylamide group;
(I) a hydroxysilyl group;
(J) an epoxy group, an oxetane group;
(K) an oxazoline group;
(L) an isocyanate group;
(M) a carbodiimide group;
(N) a methylol group; and
(O) a silanol group, an alkoxysilyl group.

The reactive functional group in R₁, the reactive functional group in R₂, and the reactive functional group in R₃ may be classified into mutually different classification groups selected from classification groups (A) to (O).

In this case, the solvent solubility tends to be easily enhanced. For example, the reactive functional group in R₁ can be classified into classification group (A), the reactive functional group in R₂ can be classified into classification group (B), and the reactive functional group in R₃ can be classified into classification group (C). However, when n = 0, or when n ≥ 1 and k = 0, R₃ is absent.

Moreover, the reactive functional group in R₁, the reactive functional group in R₂, and the reactive functional group in R₃ may be classified into two or more classification groups selected from (A) to (O). In this case, the solvent solubility tends to be easily enhanced. For example, the reactive functional group in R₁ can be classified into classification group (A), the reactive functional group in R₂ can be classified into classification group (A) or (C), and the reactive functional group in R₃ can be classified into classification group (B). However, when n = 0, or when n ≥ 1 and k = 0, R₃ is absent.

Moreover, two or more of the reactive functional group in R₁, the reactive functional group in R₂, and the reactive functional group in R₃ may be classified into the same classification group selected from classification groups (A) to (O). In this case, enhanced cross-link density tends to be ensured through a single crosslinking process. For example, the reactive functional group in R₁ can be classified into classification group (A), the reactive functional group in R₂ can be classified into classification group (A), and the reactive functional group in R₃ can be classified into classification group (A) or (B). However, when n = 0, or when n ≥ 1 and k = 0, R₃ is absent.

### <A₁ to A₈ in formula (1)>

In formula (1), A₁ to A₈ each independently represent a carbonyl group or a single bond, at least one of A₁ and A₂ is a carbonyl group, at least one of A₃ and A₄ is a carbonyl group, at least one of A₅ and A₆ is a carbonyl group, and at least one of A₇ and A₈ is a carbonyl group. When one of the two A groups present at both ends of -NH-NH- is a carbonyl group, the degradable cross-linking agent has a monoacylhydrazine structure, and the rate of degradation with an oxidizing agent tends to be enhanced. When both A groups are carbonyl groups, the degradable cross-linking agent has a diacylhydrazine structure, and the degradation product tends to dissolve easily in a solution containing an oxidizing agent.

### <Z in formula (1)>

In formula (1), each Z independently represents a group containing a siloxane structure or a hydrocarbon group optionally containing a heteroatom. The number of carbon atoms in the hydrocarbon group is preferably 1 to 700, more preferably 2 to 200, still more preferably 4 to 50, in view of the degradation rate and cross-link density. The hydrocarbon group has a saturated or unsaturated hydrocarbon group as the main backbone, and may have a linear, branched, or cyclic structure.

The hydrocarbon group may have a substituent. Specific examples of the substituent include an alkoxy group, a phenoxy group, a halogen atom, an amino group, a sulfo group, a cyano group, and a nitro group.

The hydrocarbon group may contain a heteroatom. When a heteroatom is present, the number thereof is preferably 1 to 300, more preferably 1 to 100, still more preferably 1 to 10. The heteroatom may be present on the main chain or side chain of the hydrocarbon group. Examples of the heteroatom include N, S, O, and P. Examples of a heteroatom-containing structure include: -NH-, 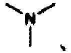 -O-, 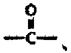 -S-, -SO₂-

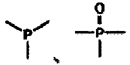

The siloxane structure-containing group is a divalent or higher-valent group. The siloxane structure-containing group contains a -Si-O- bond, and may have a linear, branched, or cyclic structure. The number of silicon atoms in the siloxane structure-containing group is preferably 2 to 300, more preferably 2 to 100, still more preferably 2 to 20.

The hydrogen atom bonded to the silicon atom may be substituted. Specific examples of such a substituent include an alkyl group, an alkoxy group, a phenoxy group, a halogen atom, an amino group, a sulfo group, a cyano group, and a nitro group.

Specific examples of the siloxane structure-containing group include dimethyl silicone, diethyl silicone, ethyl methyl silicone, and polymethylsilsesquioxane, as well as modified silicones obtained by modifying a hydrocarbon group at the terminal and/or side chain of any of the foregoing groups to incorporate a heteroatom such as N, S, O, or P.

Z may have a reactive functional group. Examples of the reactive functional group include a hydroxyl group, an amino group, a hydrazide group, a thiol group, an isoprenyl group, a crotonamide group, a crotonate group, a carboxylic acid, an acid anhydride group, a vinyl group, an allyl group, an acrylate group, a methacrylate group, an acrylamide group, a methacrylamide group, a hydroxysilyl group, an epoxy group, an oxetane group, an oxazoline group, an isocyanate group, a carbodiimide group, a methylol group, a silanol group, and an alkoxysilyl group.

The hydrocarbon group denoted by Z may have an asymmetric structure. In the present invention, structural symmetry can be determined based on whether two overlapping structures can be provided by dividing, with a plane, a structure located between a combination of two hydrazine-derived structures (-A-NH-NH-A-). When there is no plane that can provide two overlapping structures, the structure can be determined to be an asymmetric structure. When there is a plane that can provide two overlapping structures, the structure can be determined to be a symmetric structure. However, when Z is bonded to three or more hydrazine-derived structures (-A-NH-NH-A-), and no plane that can provide two overlapping structures exists between a certain combination of two hydrazine-derived structures (-A-NH-NH-A-), Z is determined to have an asymmetric structure, regardless of whether a plane that can provide two overlapping structures exists between another combination of two hydrazine-derived structures (-A-NH-NH-A-).

Specific examples of the asymmetric structure include the following formulas (7) to (22).

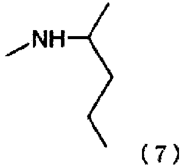

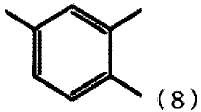

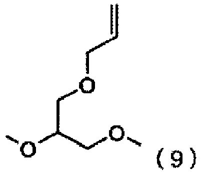

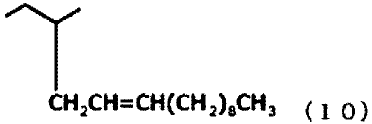

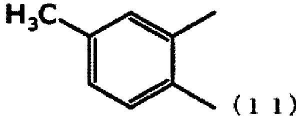

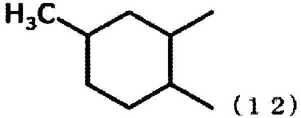

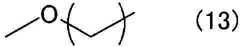

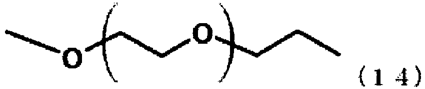

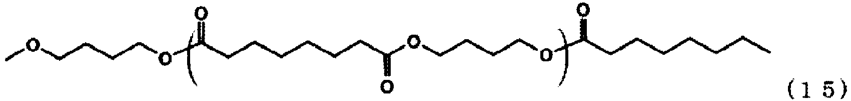

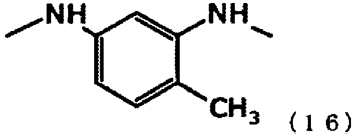

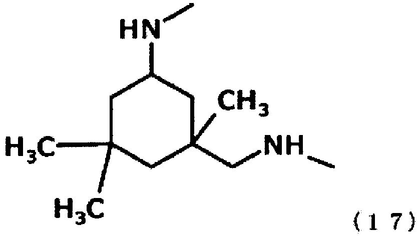

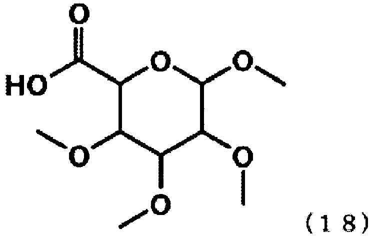

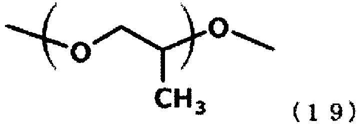

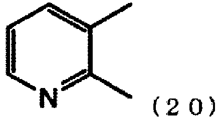

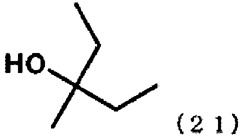

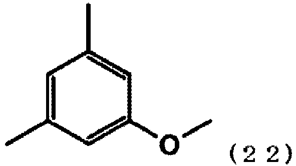

Specific examples of the symmetric structure include linear hydrocarbons such as methylene, ethylene, n-propylene, n-butylene, n-pentylene, n-hexylene, n-heptylene, n-octylene, and n-nonylene; branched hydrocarbons such as isobutylene and 2,2-dimethylpropylene; cyclic hydrocarbons such as cyclohexylene, cyclopentylene, phenylene, and 2,6-pyridylene; ethylene glycol, polyethylene glycol, 1,4-butanediol, 1,6-hexanediamine, 4,4'-diaminodiphenylmethane, and bisphenol A, as well as trivalent or tetravalent groups corresponding to the foregoing groups.

When the degradable cross-linking agent contains, within its molecule, two or more Z groups that differ in structure from each other, the degradability can be controlled by selecting the combination of Z types. Examples of such combinations of two or more Z groups in terms of the properties of the degradation product include a combination of Z which imparts high water solubility to the degradation product and Z which imparts low water solubility to the degradation product. Other examples of combinations in terms of the properties before degradation include a combination of hydrophilic Z and hydrophobic Z, a combination of Z with high polarity and Z with low polarity, and a combination of Z having a flexible structure and Z having a rigid structure. Moreover, the solvent solubility and miscibility with other compositions may be adjusted by using a combination of Z having a symmetric structure and Z having an asymmetric structure.

The degradable cross-linking agent preferably has a weight average molecular weight of 100 to 10000, more preferably 100 to 2000. When the molecular weight is within the above range, the cross-link density and degradability tend to be enhanced.

The degradable cross-linking agent is preferably liquid at 30°C to 60°C, more preferably at 30°C to 40°C. Such a degradable cross-linking agent has advantages such as excellent miscibility with other components when prepared into a composition, and suppression of precipitation of other components during the forming process.

### <Method for synthesizing degradable cross-linking agent>

The degradable cross-linking agent may be synthesized by any method. Examples of such methods include a reaction of a hydrazide compound, a semicarbazide compound, or a carbazate compound with a carbonate compound, an isocyanate compound, an acid anhydride, an acid halide, or a cyclic ester compound; a reaction of hydrazine with a carboxylic acid ester; a reaction of hydrazine with a carbonate compound; and a reaction of hydrazine with an isocyanate compound.

Examples of hydrazide compounds that can be used in the synthetic method include lactic acid hydrazide, methacrylic acid hydrazide, sebacic acid dihydrazide, adipic acid dihydrazide, phthalic acid dihydrazide, salicylic acid dihydrazide, trimellitic acid trihydrazide, 4-hydroxybutyric acid hydrazide, 4-hydroxybenzohydrazide, 6-hydroxyhexanoic acid hydrazide, and citric acid trihydrazide. Examples of carbonate compounds include allyl N-succinimidyl carbonate and C,C'-(oxydi-2,1-ethanediyl)bis-N-succinimidyl carbonate. Examples of isocyanate compounds include 2-isocyanatoethyl methacrylate, hexamethylene diisocyanate, toluene diisocyanate, and polymethylene polyphenyl polyisocyanate. Examples of semicarbazide compounds include N-allylhydrazinecarboxamide, N,N'-1,6-hexanediylbis[hydrazinecarboxamide], 4,4'-isophoronebis(semicarbazide), and 4,4'-(1,3-phenylenebismethylene)bis(semicarbazide). Examples of carbazate compounds include allyl carbazate and C,C'-(oxydi-2,1-ethanediyl)biscarbazate. Examples of acid anhydrides include methacrylic anhydride, succinic anhydride, and pyromellitic dianhydride. Examples of acid halides include acryloyl chloride, sebacoyl chloride, adipoyl chloride, phthaloyl chloride, salicyloyl chloride, and trimesoyl chloride. Examples of cyclic ester compounds include propiolactone, butyrolactone, and valerolactone. Examples of carboxylic acid esters include ethyl lactate, methylparaben, monomethyl succinate, diethyl adipate, and trimethyl trimellitate.

### <Composition>

The composition of the present invention contains the above-described degradable cross-linking agent and at least one selected from the group consisting of a curable resin, a polymerization initiator, and a solvent. The degradable cross-linking agent content in the composition is preferably 0.1 to 99% by weight, more preferably 1 to 50% by weight.

### <Curable resin>

The curable resin may be any curable resin having a structure that can react with a reactive functional group in the degradable cross-linking agent for cross-linking. Examples of the curable resin include acrylic resins, phenolic resins, epoxy resins, melamine resins, urea resins, unsaturated polyester resins, alkyd resins, silicone resins, isocyanate compounds, and polyimides. The curable resin may be a thermosetting resin or a photocurable resin. The curable resin content in the composition is preferably 0.1 to 95% by weight, more preferably 1 to 50% by weight.

### <Polymerization initiator>

The polymerization initiator may be any compound that can catalyze the polymerization of the curable resin used and may be either a thermal polymerization initiator or a photopolymerization initiator. Examples of the polymerization initiator include radical generators such as alkylphenone compounds, benzoin compounds, benzophenone compounds, oxime ester compounds, and phosphine compounds; base generators such as oxime ester compounds, ammonium compounds, benzoin compounds, dimethoxybenzyl urethane compounds, and o-nitrobenzyl urethane compounds; acid generators such as onium salts, halogen-containing compounds, diazomethane compounds, sulfone compounds, and sulfonate compounds; tin compounds such as dibutyltin dilaurate and dibutyltin diacetate; bismuth compounds such as bismuth 2-ethylhexanoate; titanium compounds such as tetraoctyl titanate and titanium ethyl acetoacetate; zirconium compounds such as zirconium monoacetylacetate and zirconium tetraacetylacetate; amines such as triethylenediamine and 1,4-diazabicyclo[2.2.2]octane (DABCO); platinum compounds such as chloroplatinic acid and alkenylsiloxane platinum complexes; iron complexes; and cobalt complexes. The polymerization initiator content in the composition is preferably 0.1 to 10 parts by weight, more preferably 1 to 5 parts by weight, per 100 parts by weight of the curable resin content.

### <Solvent>

Examples of the solvent include water and organic solvents. Examples of the organic solvents include carbon atom-containing solvents such as ether solvents, amide solvents, hydrocarbon solvents, alcohol solvents, ester solvents, aldehyde solvents, ketone solvents, and solvents containing carbon atoms and heteroatoms.

Examples of the ether solvents include propylene glycol monomethyl ether, anisole, 4-methylanisole, diisopropyl ether, diethyl ether, dibutyl ether, tetrahydrofuran, dimethoxyethane, cyclopentyl methyl ether, and tert-butyl methyl ether. Examples of the amide solvents include dimethylformamide, dimethylacetamide, and N-methylpyrrolidone. Examples of the hydrocarbon solvents include aliphatic hydrocarbon solvents such as pentane, hexane, heptane, octane, nonane, decane, undecane, dodecane, and cyclohexane, and aromatic hydrocarbon solvents such as benzene, toluene, xylene, mesitylene, ethylbenzene, tert-butylbenzene, trifluoromethylbenzene, nitrobenzene, and chlorobenzene. Examples of the alcohol solvents include methanol, ethanol, propanol, butanol, ethylene glycol, and propylene glycol monomethyl ether. Examples of the ester solvents include ethyl acetate, butyl acetate, and propylene glycol monomethyl ether acetate. Examples of the aldehyde solvents include formaldehyde and acetaldehyde. Examples of the ketone solvents include acetone, methyl ethyl ketone, and methyl isobutyl ketone. Examples of the solvents containing carbon atoms and heteroatoms include acetonitrile and dimethyl sulfoxide. The solvent content in the composition is preferably 5 to 99% by weight, more preferably 20 to 80% by weight.

The above-listed solvents may be used alone or in combination of two or more. Moreover, the solvent used preferably has a boiling point of 150°C or lower, more preferably 130°C or lower, still more preferably 110°C or lower. When the boiling point is within the above range, the solvent can be removed by heating for a relatively short time. The composition preferably contains substantially no solvent with a boiling point of higher than 150°C. The phrase "contains substantially no solvent with a boiling point of higher than 150°C" means that the content in the composition is less than 1% by weight.

### <Degradable cross-linked product>

The degradable cross-linked product of the present invention can be obtained by curing a composition that contains the degradable cross-linking agent and at least one selected from the group consisting of a curable resin, a polymerization initiator, and a solvent. The degradable cross-linked product may be produced from the composition by any method that can promote the polymerization and cross-linking of the curable resin. A person skilled in the art can appropriately select the conditions for light irradiation, heating, or other processes depending on the types of the degradable cross-linking agent, the curable resin, and the polymerization initiator contained in the composition. For example, a three-dimensional formed body of the degradable cross-linked product can be produced by injection molding, compression molding, transfer molding, 3D printing, photolithography, or other methods.

Moreover, a coating film including the degradable cross-linked product can be formed by applying the composition onto a substrate to form a coating film, and subjecting the coating film to light irradiation or heating. The material or form of the substrate is not limited and may be a resin, an inorganic material, paper, or fabric. Examples of the resin include polyesters such as polyethylene terephthalate, polyethylene naphthalate, polylactic acid, polyhydroxybutyric acid, and polybutylene succinate; polyolefins such as polyethylene, polypropylene, and polymethylpentene; cycloolefins, polystyrenes, polytetrafluoroethylene, PMMA, polyamides such as nylon 6 and nylon 66, polycarbonates, poly(vinyl acetate), poly(vinyl alcohol), polyimides, ABS resins, cellulose, cellulose acetate, fibroin, and keratin. Examples of the inorganic material include glass, metals such as Ni, Cu, Cr, Fe, and Si, and oxides or composite materials thereof.

Examples of the method for applying the composition onto the substrate include bar coating, spin coating, spray coating, dip coating, nozzle coating, gravure coating, reverse roll coating, die coating, air doctor coating, blade coating, rod coating, curtain coating, knife coating, transfer roll coating, squeeze coating, impregnation coating, kiss coating, calender coating, and extrusion coating.

The composition applied on the substrate can be cured under any condition. The conditions for curing by light irradiation may include a light irradiation dose of 100 to 2000 mJ/cm². Curing by heating may be performed preferably at a heating temperature of 40°C to 300°C, more preferably 80°C to 120°C. Moreover, the duration of heating is preferably 0.5 to 180 minutes, more preferably 0.5 to 10 minutes.

The thickness of the cured coating film is preferably, but not limited to, 0.01 to 30 µm, more preferably 0.05 to 10 µm. The coating film having a thickness within the above range can maintain the strength and adhesion to the substrate.

### <Method for degrading degradable cross-linked product>

The method for degrading a degradable cross-linked product of the present invention includes bringing the degradable cross-linked product into contact with an aqueous solution containing an oxidizing agent at 100°C or lower.

### <Oxidizing agent>

The oxidizing agent may be any oxidizing agent other than molecular oxygen. Examples include sodium hypochlorite, potassium hypochlorite, calcium hypochlorite, ammonium hypochlorite, hydrogen peroxide, peracetic acid, m-chloroperoxybenzoic acid, peroxybenzoic acid, ammonium hypobromite, calcium hypobromite, potassium hypobromite, sodium hypobromite, and ozone. These may be used alone or in combination of two or more. In particular, a water-soluble salt such as sodium hypochlorite or sodium hypobromite or ozone water is preferred. The aqueous solution containing any of these oxidizing agents may contain an alkaline agent, such as sodium hydroxide, potassium hydroxide, calcium hydroxide, sodium carbonate, sodium bicarbonate, or tetramethylammonium hydroxide, an organic solvent, such as an alcohol (e.g., ethanol, methanol, or isopropanol), or a surfactant. The oxidizing agent concentration in the aqueous solution is preferably 0.001 to 50% by weight, more preferably 0.01 to 3% by weight.

The degradable cross-linked product is brought into contact with the oxidizing agent-containing aqueous solution at a temperature of 100°C or lower, preferably 15°C to 50°C. The duration is preferably 60 minutes or shorter, more preferably 10 minutes or shorter. If necessary, shaking or stirring may be performed during the reaction with the oxidizing agent. Non-limiting specific examples of the method for bringing the degradable cross-linked product into contact with the oxidizing agent-containing aqueous solution include immersing the degradable cross-linked product in the oxidizing agent-containing aqueous solution, or spraying or adding dropwise the oxidizing agent-containing aqueous solution onto the degradable cross-linked product.

Examples of the degradation product produced by contact between the degradable cross-linked product and the oxidizing agent include N₂, H₂O, and compounds represented by the following formulas (3) to (6):

HO-CO-Z(COOH)ₖ-COOH (3);

H-Z(COOH)ₖ-COOH (4);

HO-CO-Z(H)ₖ-COOH (5);

and

H-Z(H)ₖ-H (6).

In formulas (3) to (6), Z and k are the same as those in formula (1). The H or carboxyl group bonded directly to Z may be bonded to a heteroatom in Z.

When a hydrazine-derived structure (-A-NH-NH-A-) is bonded to a carbon atom in Z, and A is a carbonyl group, the degradation product contains a carboxyl group. Specific examples of the carboxyl group-containing degradation product include succinic acid, malonic acid, adipic acid, phthalic acid, trimellitic acid, and polyacrylic acid.

When a hydrazine-derived structure (-A-NH-NH-A-) is bonded to an oxygen atom in Z, and A is a carbonyl group, the degradation product contains -OH at the terminal. Specific examples of the terminal -OH-containing degradation product include ethylene glycol, diethylene glycol, triethylene glycol, hexanediol, pentitol, pentaerythritol, polyethylene glycol, polyvinyl alcohol, resorcinol, and phenol novolac.

When a hydrazine-derived structure (-A-NH-NH-A-) is bonded to a nitrogen atom in Z, and A is a carbonyl group, the degradation product contains -NH₂ at the terminal. Specific examples of the terminal -NH₂-containing degradation product include hexamethylenediamine, pentamethylenediamine, isophoronediamine, toluenediamine, and diaminodiphenylmethane.

When a hydrazine-derived structure (-A-NH-NH-A-) is bonded to a sulfur atom in Z, and A is a carbonyl group, the degradation product is a thiol. Specific examples of the thiol include pentaerythritol tetrakis(3-mercaptobutyrate), trimethylolpropane, tris(3-mercaptobutyrate), 1,4-bis(3-mercaptobutyryloxy)butane, triazine thiol, and 4-mercaptobenzoic acid.

The degradability of the degradable cross-linked product upon contact with the oxidizing agent may be evaluated by any method that can be selected appropriately depending on the solvent solubility of the degradable cross-linked product and the solvent solubility of the degradation product. An exemplary method may be used in which 2 mL of a 20% aqueous sodium hypochlorite solution is added to 2 mg of the degradable cross-linked product, followed by reaction at room temperature for 30 minutes. Another method may be used in which 2 mg of the degradable cross-linked product is mixed with 0.5 mL of a heavy solvent, such as heavy water, deuterated chloroform, deuterated DMSO, or deuterated methanol, and several drops of a 20% aqueous sodium hypochlorite solution are added, followed by reaction at room temperature for five minutes. After such a process, the degradable cross-linked product is preferably completely degraded. The degradation products can be analyzed by NMR.

### <Application of degradable cross-linking agent>

Since the degradable cross-linking agent of the present invention has excellent solvent solubility, it can be used for cross-linking various resins. Examples of applications of the cross-linked product obtained using the degradable cross-linking agent of the present invention include adhesives, pressure-sensitive adhesives, water-absorbent resins, resins for 3D printing, photoresists, release agents, cell culture media, immobilization materials for affected areas, and imprint molded articles.

### EXAMPLES

The present invention is described below with reference to examples, but the present invention is not limited thereto. Hereinafter, the units "part(s)" and "%" refer to "part(s) by weight" and "% by weight", respectively, unless otherwise specified.

### (Comparative Example 1)

An amount of 1.4 g of pyridine, 10.3 g of acetonitrile, and 0.86 g of allylacetohydrazide were mixed in a 30 mL two-necked flask. A solution of 0.82 g of sebacoyl chloride in 6.2 g of acetonitrile was added dropwise to the mixture at 5°C or lower and then stirred at room temperature for three hours to obtain a white solid. The white solid was washed with 30 g of acetonitrile and dried in a vacuum dryer at 40°C to obtain a compound of formula (A1) in a yield of 95%.

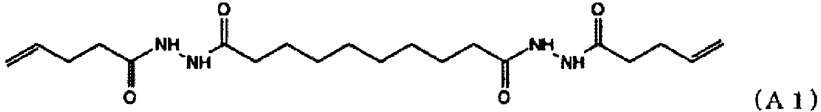

1H-NMR (DMSO, δ ppm) 1.25 (8H, S, C8H16), 1.50 (4H, t, C8H16), 2.09 (4H, t, C8H16), 2.17-2.18 (8H, m, C2H4), 4.96 (2H, d, C=CH2), 5.05 (2H, d, C=CH2), 5.76-5.87 (2H, m, CH=C), 9.66 (2H, S, NHNH), 9.69 (2H, S, NHNH)

The solvent solubility of the obtained compound of formula (A1) was evaluated. Table 2 shows the results. Upon adding a 5% aqueous sodium hypochlorite solution to the powdery compound of formula (A1), foaming and degradation of the compound were observed.

An amount of 0.3 g of the compound of formula (A1), 0.1 g of poly(methylhydrosiloxane), and 4.0 mg of a platinum catalyst (trade name: CAT-PL-50T, available from Shin-Etsu Chemical Co., Ltd.) were added to 40 g of a solvent mixture of dimethyl sulfoxide and propylene glycol monomethyl ether (weight ratio 3:1) to prepare a thermosetting composition solution. The solution was applied onto a glass substrate to give a cured film thickness of 0.1 µm, and then dried and cured at 150°C for 10 minutes to obtain a degradable cross-linked product. A small amount of precipitate was observed on the cured coating film. The degradable cross-linked product was generally insoluble in water, but partial dissolution of the degradable cross-linked product was observed. When the degradable cross-linked product was immersed in a 10% aqueous sodium hypochlorite solution, foaming and removal of the product from the substrate were observed.

### (Comparative Example 2)

An amount of 1.8 g of sodium 5-sulfoisophthalate dihydrazide was dissolved in 40 g of methyl sulfoxide in a 100 mL three-necked flask. Then, 3.4 g of diethyl 2-isocyanatoglutarate was added to the solution, and the mixture was stirred at 80°C overnight. After the reaction mixture was left to cool to room temperature, it was diluted with 100 g of pure water. The aqueous layer was washed three times with 90 g of ethyl acetate and then concentrated. The resulting residue was dried in vacuum. The resulting pale orange solid was transferred to a 30 mL round-bottom flask, and 4.6 g of hydrazine monohydrate was added thereto, followed by stirring at room temperature for four hours. The reaction mixture was added dropwise to 200 g of methanol to precipitate a white solid. The obtained solid was collected by filtration and then dried in vacuum to obtain a compound of formula (A2) in a yield of 93%.

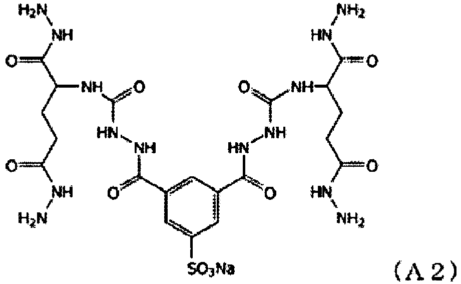

1H-NMR (DMSO, δ ppm) 1.70-1.86 (4H, m, CH₂), 1.97-2.09 (4H, m, C=OCH₂), 4.13 (2H, q, C=OCH), 4.23 (8H, br, NH₂), 6.72 (2H, br, NCONHC), 8.12 (2H, s, NC=ONHN), 8.30 (2H, s, benzene ring), 8.32 (1H, s, benzene ring), 8.98 (2H, s, CC=ONH), 9.15 (2H, br, CC=ONH), 10.41 (2H, br, CC=ONH)

The solvent solubility of the obtained compound of formula (A2) was evaluated. Table 2 shows the results. Upon adding a 5% aqueous sodium hypochlorite solution to the powdery compound of formula (A2), foaming and degradation of the compound were observed.

An amount of 0.3 g of the compound of formula (A2) was dissolved in 40 g of N-methylpyrrolidone, and 0.65 g of a bisphenol A epoxy resin (jER828 available from Mitsubishi Chemical Corporation) was added to the solution to prepare a thermosetting composition. The composition was applied onto a glass substrate to give a cured film thickness of 2 µm, and then dried and cured at 130°C for 30 minutes to obtain a degradable cross-linked product. A small amount of precipitate was observed on the cured coating film. The degradable cross-linked product was partially soluble in water. When the degradable cross-linked product was immersed in a 20% aqueous sodium hypochlorite solution, foaming and degradation of the product were observed.

### (Example 1)

In a 100 mL round-bottom flask, 2.9 g of the compound of formula (A2) was dissolved in 33 g of dimethyl sulfoxide, and then 4.1 g of N-(allyloxycarbonyloxy)succinimide was added to the solution, followed by stirring at room temperature overnight. The reaction liquid was transferred to a separatory funnel and diluted with 105 g of pure water. The resulting aqueous layer was washed three times with 80 g of methylene chloride and then concentrated to obtain a pale orange solid. The solid was washed three times with 150 g of methylene chloride and then dried in vacuum to obtain a compound of formula (B 1) in a yield of 83%.

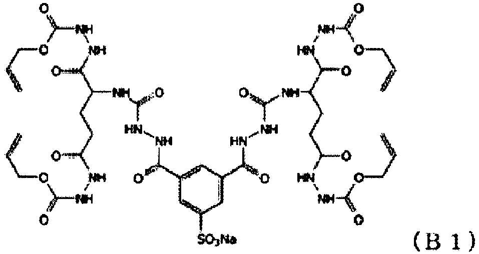

1H-NMR (DMSO, δ ppm) 1.72-1.94 (4H, m, CH₂), 2.19 (4H, br, C=OCH₂), 4.26 (2H, q, C=OCH), 4.50-4.55 (8H, m, OCH₂), 5.20 (4H, dd, C=CH₂), 5.31 (4H, dd, C=CH₂), 5.87-5.95 (2H, m, CH=C), 6.69 (2H, br, NC=ONHC), 8.18 (2H, s, NC=ONHN), 8.28 (2H, s, benzene ring), 8.30 (1H, s, benzene ring), 9.06 (2H, s, OC=ONH), 9.24 (2H, s, OC=ONH), 9.69 (2H, s, CC=ONH), 9.89 (2H, br, CC=ONH), 10.40 (2H, br, CC=ONH)

The solvent solubility of the obtained compound of formula (B1) was evaluated. Table 1 shows the results. Upon adding a small amount of a 20% aqueous sodium hypochlorite solution to the powdery compound of formula (B1), foaming occurred. 1H-NMR analysis confirmed the generation of 5-sulfoisophthalic acid and allyl alcohol as degradation products. The obtained compound of formula (B 1) was solid at 60°C.

An amount of 0.3 g of the compound of formula (B1) and 0.22g of tetraethylene glycol bis(3-mercaptopropionate) were dissolved in 4 g of a solvent mixture of methanol and N-methylpyrrolidone (weight ratio 3:1). To the solution were added 8 mg of a photopolymerization initiator (Omnirad 907 available from IGM Resins) and 8 mg of a photopolymerization initiator (Omnirad TPO available from IGM Resins) to prepare a photocurable composition. The composition was applied onto a glass plate to give a dried film thickness of 2 µm, and then exposed to ultraviolet rays at 500 mJ/cm² using a UV irradiation device (Unicure UVH-1500M available from USHIO Inc.) to obtain a degradable formed product. No precipitate was observed on the cured coating film. The degradable cross-linked product was insoluble in water, but when it was immersed in a 20% aqueous sodium hypochlorite solution, foaming and removal of the product from the substrate were observed.

### (Example 2)

In a 200 mL round-bottom flask, 2.0 g of 4-hydroxybutyric acid hydrazide was dissolved in 170 g of acetonitrile at 50°C, 3.4 g of N-(allyloxycarbonyloxy)succinimide was added to the solution, and the mixture was stirred at 40°C for one hour and then further stirred at room temperature overnight. After concentrating the reaction liquid using an evaporator, 30 g of chloroform was added thereto to precipitate N-hydroxysuccinimide as a white solid. The N-hydroxysuccinimide was removed by filtration, and the solvent was removed again by evaporation to obtain a compound of formula (B2) in a yield of 90%. The obtained compound of formula (B2) was liquid at 50°C.

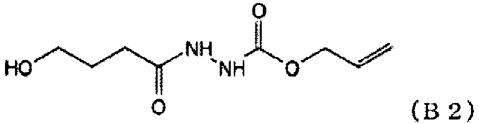

1H-NMR (DMSO, δ ppm) 1.61-1.68 (2H, m, CH₂), 2.12 (2H, t, C=OCH₂), 3.89 (2H, q, OCH₂), 4.45 (1H, t, OH), 4.51 (2H, q, C=OOCH₂), 5.20 (1H, d, C=CH2), 5.30 (1H, d, C=CH2), 5.85-5.96 (1H, m, CH=C), 9.04 (1H, s, NHNH), 9.59 (1H, s, NHNH)

An amount of 0.9 g of a nurate-modified product of hexamethylene diisocyanate (BURNOCK DN-901S available from DIC), 1.0 g of the compound of formula (B2), and 0.9 g of tetraethylene glycol bis(3-mercaptopropionate) were dissolved in 20 g of a solvent mixture of propylene glycol monomethyl ether and butyl acetate (weight ratio 1:1). To the solution were added 70 mg of a dibutyltin curing catalyst (NEOSTANN U-810 available from Nitto Kasei Co., Ltd.), 40 mg of a photopolymerization initiator (Omnirad 907 available from IGM Resins), and 40 mg of a photopolymerization initiator (Omnirad TPO available from IGM Resins) to prepare a thermosetting composition solution. The composition was applied onto a glass plate to give a dried film thickness of 10 µm, and dried and cured using a fan dryer at 100°C for 120 minutes, followed by exposure to ultraviolet rays at 500 mJ/cm² using a UV irradiation device (Unicure UVH-1500M available from USHIO Inc.) to obtain a degradable cross-linked product. No precipitate was observed on the cured coating film. The degradable cross-linked product was insoluble in water, but when it was immersed in a 20% aqueous sodium hypochlorite solution, foaming and removal of the product from the substrate were observed.

### (Example 3)

In a 200 mL round-bottom flask, 10.0 g of lactic acid hydrazide and 33.1 g of γ-butyrolactone were mixed, followed by stirring at 85°C for two days. An amount of 69 g of methyl ethyl ketone was added to the mixture, and the mixture was cooled with ice to form a precipitate. After removing the solvent by decantation, the precipitate was washed twice with 50 g of methyl ethyl ketone. The precipitate was dried in vacuum to obtain a compound of formula (B3) in a yield of 72%. The obtained compound of formula (B3) was liquid at 50°C.

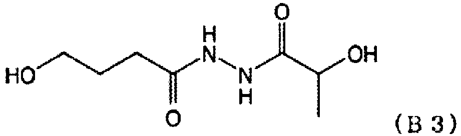

1H-NMR (DMSO, δ ppm) 1.24 (3H, dd, CH₃), 1.61-1.69 (2H, m, CH₂), 2.12-2.17 (2H, m, C=OCH₂), 3.39-3.43 (2H, m, OCH₂), 4.03-4.11 (1H, m, CH), 4.47 (1H, t, OH), 5.46 (1H, d, OH), 9.47 (1H, br, NHNH), 9.68 (1H, br, NHNH)

An amount of 1.9 g of a nurate-modified product of hexamethylene diisocyanate (BURNOCK DN-901S available from DIC) and 1.0 g of the compound of formula (B3) were dissolved in 20 g of a solvent mixture of N-methylpyrrolidone and butyl acetate (weight ratio 1:1). To the solution was added 75 mg of a dibutyltin curing catalyst (NEOSTANN U-810 available from Nitto Kasei Co., Ltd.) to prepare a thermosetting composition solution. The composition was applied onto a glass plate to give a dried film thickness of 10 µm, and then dried and cured using a fan dryer at 100°C for 120 minutes to obtain a degradable cross-linked product. No precipitate was observed on the cured coating film. The degradable cross-linked product was insoluble in water, but when it was immersed in a 20% aqueous sodium hypochlorite solution, foaming and removal of the product from the substrate were observed.

### (Example 4)

In a 300 mL round-bottom flask, 5.0 g of 4-hydroxybenzohydrazide was dissolved in 65 g of acetone and 65 g of pure water, and 8.75 g of 2-dodecen-1-ylsuccinic anhydride was added to the solution, followed by stirring overnight at room temperature. The reaction liquid was concentrated using an evaporator to form a precipitate. After removing the solvent by decantation, the precipitate was washed with 73 g of pure water and dried in vacuum to obtain a compound of formula (B4) in a yield of 86%. The obtained compound of formula (B4) was liquid at 50°C.

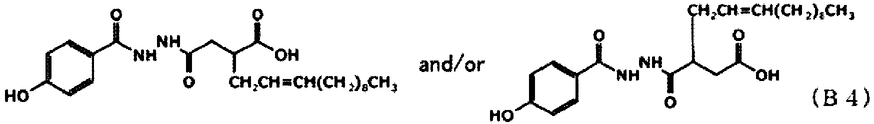

1H-NMR (DMSO, δ ppm) 0.85 (3H, t, CH₃), 1.24 (14H, br, CH₂), 1.92-2.75 (7H, m, CH, CH₂), 5.26-5.38 (1H, m, CH=CH), 5.39-5.47 (1H, m, CH=CH), 6.80 (2H, d, benzene ring), 7.74 (2H, d, benzene ring), 9.78 (1H, br, NHNH), 9.81 (1H, br, NHNH), 10.03 (1H, br, OH), 11.13 (1H, br, C=OOH)

An amount of 3.0 g of the compound of formula (B4) and 2.7 g of a bisphenol A epoxy resin (jER828 available from Mitsubishi Chemical Corporation) were mixed at 50°C, and then 120 mg of benzyldimethylamine was added to the mixture to prepare a thermosetting composition. The composition was applied onto a glass substrate to give a cured film thickness of 10 µm, and then cured at 130°C for three hours to obtain a degradable cross-linked product. No precipitate was observed on the cured coating film. The degradable cross-linked product was insoluble in water, but when it was immersed in a mixture of a 20% aqueous sodium hypochlorite solution and propylene glycol monomethyl ether (weight ratio 2:1), foaming and removal of the product from the substrate were observed.

### (Example 5)

In a 1 L round-bottom flask, 14.5 g of N-hydroxysuccinimide was dissolved in 377 g of THF, and 9.5 g of isophthalic acid and 24.3 g of 1-ethyl-3-(3-dimethylaminopropyl)carbodiimide hydrochloride were added to the solution, followed by stirring at room temperature overnight. After the resulting mixture was concentrated using an evaporator, 310 g of chloroform was added, and the mixture was transferred to a separatory funnel. The organic layer was washed four times with 200 g of ion-exchange water. The organic layer was dried over 5.8 g of magnesium sulfate and then concentrated using an evaporator. The concentrated liquid was added dropwise to 150 g of isopropanol to precipitate a solid. The obtained solid was dried in a vacuum dryer at 25°C overnight. An amount of 13.6 g of 6-hydroxyhexanoic acid hydrazide, 18 g of triethylamine, and 40 g of DMF were mixed in a 100 mL round-bottom flask, and 15.3 g of the dried solid was added thereto. After stirring at room temperature overnight, the reaction liquid was added dropwise to 800 g of acetonitrile to precipitate a white powder. The white powder was collected by filtration, washed with 200 g of acetonitrile, and then dried in a vacuum dryer at 50°C for three hours. An amount of 3 g of the dried white powder was transferred to a 100 mL round-bottom flask and dissolved in 18 g of DMF, and then 4.3 g of triethylamine and 4.0 g of di(N-succinimidyl) carbonate were added to the solution, followed by stirring at room temperature for 90 minutes. Thereafter, 1.0 g of succinic acid dihydrazide and 36 g of DMSO were added to the mixture, followed by stirring for three hours. Then, an additional 0.2 g of succinic acid dihydrazide was added to the mixture, followed by stirring overnight. The reaction liquid was added dropwise to 800 g of ethyl acetate to precipitate a viscous solid. The viscous solid was washed with 100 g of aqueous acetone and dried in a vacuum dryer overnight to obtain a compound of formula (B5) in a yield of 75%. The molecular weight was 19,000 as measured by GPC.

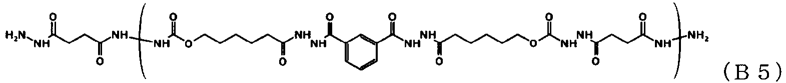

1H-NMR (DMSO, δ ppm) 1.33 (92H, br, CH₂), 1.58 (184H, br, CH₂), 2.10-2.23 (92H, m, O=CCH₂), 2.36 (96H, br, O=CCH₂), 4.00 (92H, br, O=COCH₂), 4.18 (4H, br, NH₂), 7.61-7.69 (23H, m, benzene ring), 8.01 (46H, dd, benzene ring), 8.33 (23H, br, benzene ring), 8.95 (46H, br, NHNH), 9.10 (2H, br, NH), 9.67 (46H, br, NHNH), 9.91 (46H, br, NHNH), 10.37 (46H, br, NHNH)

An amount of 1.0 g of the compound of formula (B5) and 0.02 g of a phenol novolac epoxy resin (jER152 available from Mitsubishi Chemical Corporation) were mixed at 40°C to prepare a thermosetting composition. The composition was applied onto a Teflon petri dish to give a film thickness of 1 mm, followed by heating at 90°C for three hours to obtain a degradable cross-linked product. No precipitate was observed on the cured formed product. The degradable cross-linked product was insoluble in water, but when it was immersed in a mixture of a 5% aqueous sodium hypochlorite solution and a 2% aqueous sodium hydroxide solution (weight ratio 1:1), foaming and dissolution of the product were observed.

### (Example 6)

In a 200 mL round-bottom flask, 3.0 g of 6-hydroxyhexanoic acid hydrazide and 6.2 g of triethylamine were dissolved in 90 g of DMF, and 4.1 g of N-(allyloxycarbonyloxy)succinimide was added to the solution, followed by stirring at room temperature overnight. Thereafter, 5.8 g of di(N-succinimidyl) carbonate was added to the solution, and the solution was further stirred overnight, followed by addition of 2.5 g of 2-hydroxyethyl carbazate. The mixture was stirred overnight at room temperature, and the reaction liquid was added dropwise to 70 g of ethyl acetate to precipitate a viscous solid. The solvent was removed by decantation, and the resulting viscous solid was dried overnight in a vacuum dryer to obtain a compound of formula (B6) in a yield of 68%.

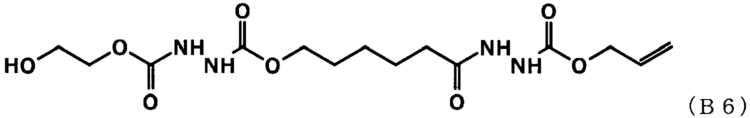

1H-NMR (DMSO, δ ppm) 1.25-1.38 (2H, m, CH₂), 1.51-1.55 (4H, m, CH₂), 2.09 (2H, t, O=CCH₂), 3.97-4.02 (4H, m, O=COCH₂), 4.51 (2H, d, O=COCH₂), 5.20 (1H, d, C=CH₂), 5.30 (1H, d, C=CH₂), 5.85-5.95 (1H, m, CH=C), 9.00 (3H, br, NHNH), 9.60 (1H, br, NHNH)

An amount of 5 g of N-methylpyrrolidone, 1.0 g of 2-isocyanatoethyl acrylate, and 3.0 g of the compound of formula (B6) were mixed, and then 10 g of toluene, 1.0 g of pentaerythritol tetrakis(3-mercaptobutyrate), 0.05 g of a photopolymerization initiator (Omnirad 127 available from IGM Resins), and 0.05 g of a photopolymerization initiator (Omnirad 754 available from IGM Resins) were added thereto to prepare a thermosetting and photocurable composition solution. The composition was applied onto a PET film to give a dry film thickness of 5 µm. The composition was dried with a fan dryer at 120°C for five minutes and then exposed to ultraviolet rays at 200 mJ/cm² using a UV irradiation device (Unicure UVH-1500M available from USHIO Inc.) to obtain a degradable cross-linked product. No precipitate was formed on the coating film. The obtained degradable cross-linked product was insoluble in ion-exchanged water, but when it was immersed in a solution prepared by 8-fold dilution of an aqueous solution containing sodium hypochlorite, a surfactant, and sodium hydroxide (Kitchen Haiter available from Kao Corporation) with tap water, foaming and removal of the product from the substrate were observed. When the degradable cross-linked product was immersed in a 5% sodium dichloroisocyanurate aqueous solution, foaming and removal of the product from the substrate were observed.

### (Example 7)

In a 200 mL round-bottom flask, 15 g of citric acid trihydrazide was dissolved in a solvent mixture of 40 g of ion-exchanged water and 20 g of methanol, and 28 g of 4-hydroxybutyl acrylate was added to the solution, followed by stirring at room temperature for five days. The reaction liquid was added dropwise to 640 g of acetonitrile, and the resulting viscous liquid was collected by decantation. Then, the obtained liquid was dried in a vacuum dryer at 50°C overnight to obtain a compound of formula (B7) in a yield of 70%.

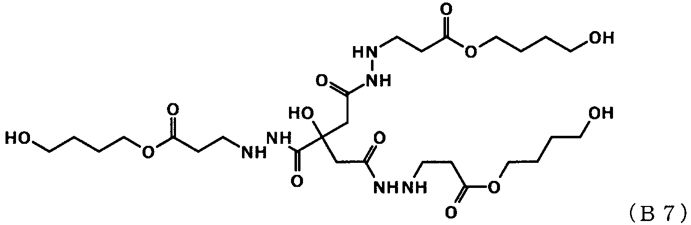

1H-NMR (DMSO, δ ppm) 1.40-1.48 (6H, m, CH₂), 1.56-1.63 (6H, m, CH₂), 2.37-2.47 (6H, m, O=CCH₂), 2.50 (4H, br, O=CCH₂), 2.84-3.00 (6H, m, NCH₂), 3.40 (6H, t, OCH₂), 4.01 (6H, t, O=COCH₂), 4.41 (3H, br, OH), 4.95 (3H, br, NH), 6.02 (1H, br, OH), 9.08-9.41 (3H, m, O=CNH)

An amount of 1.1 g of polymethylene polyphenyl polyisocyanate (Millionate MR-200 available from Tosoh Corporation) and 2.0 g of the compound of formula (B7) were dissolved in 20 g of a solvent mixture of N-methylpyrrolidone and methyl ethyl ketone (weight ratio 1:1), and 75 mg of a dibutyltin curing catalyst (NEOSTANN U-810 available from Nitto Kasei Co., Ltd.) was added to the solution to obtain a thermosetting composition solution. The composition was applied onto a glass plate to give a dry film thickness of 10 µm, and then dried and cured with a fan dryer at 100°C for 60 minutes to obtain a degradable cross-linked product. No precipitate was observed on the cured coating film. The degradable cross-linked product was insoluble in water, but when it was immersed in a solution prepared by 8-fold dilution of an aqueous solution containing sodium hypochlorite, a surfactant, and sodium hydroxide (Kitchen Haiter available from Kao Corporation) with tap water, foaming and removal of the product from the substrate were observed.

### (Example 8)

In a 500 mL round-bottom flask, 177 g of acetonitrile, 14.5 g of triethylamine, and 7.0 g of 6-hydroxyhexanoic acid hydrazide were mixed, and an acetonitrile solution containing 10 wt% of methacrylic anhydride was added dropwise at 0°C to 10°C. Thereafter, the mixture was returned to room temperature and then stirred for one hour, and then 50 g of dimethylformamide was added to the mixture, followed by stirring again at room temperature for one hour. After the reaction, 200 g of the solvent was removed using an evaporator. The remaining reaction liquid was added dropwise to 70 g of butyl acetate, and a viscous liquid was obtained by decantation, washed with 70 g of toluene, and then dried overnight in a vacuum dryer to obtain a compound of formula (B8) in a yield of 67%.

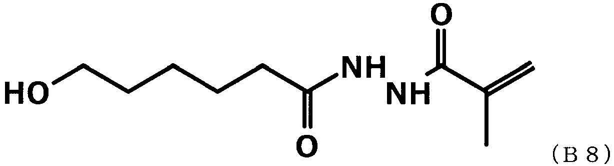

1H-NMR (DMSO, δ ppm) 1.20-1.33 (2H, m, CH₂), 1.35-1.45 (2H, m, CH₂), 1.48-1.55 (2H, m, CH₂), 1.86 (3H, s, CH₃), 2.12 (2H, t, O=CCH₂), 3.37 (2H, br, OCH₂), 4.36 (1H, br, OH), 5.43 (1H, br, C=CH₂), 5.73 (1H, br, C=CH₂), 9.63 (2H, br, NHNH)

An amount of 0.4 g of the compound of formula (B8), 6.6 g of butyl acrylate, 3.0 g of isobornyl methacrylate, 5 g of ethyl acetate, and 5 g of dimethylformamide were mixed, and 0.01 g of 2,2'-azodiisobutyronitrile was added to the mixture, followed by stirring at 65°C for six hours. Thereafter, the mixture was returned to room temperature and mixed with 0.25 g of polymethylene polyphenyl polyisocyanate (Millionate MR-200 available from Tosoh Corporation), 0.03 g of dibutyltin dilaurate, and 10 g of methyl isobutyl ketone to prepare a thermosetting composition solution. The composition was applied onto a PET film to give a dry film thickness of 15 µm, and then dried and cured with a fan dryer at 120°C for two minutes to obtain an adhesive degradable cross-linked product. No precipitate was observed on the cured coating film. The degradable cross-linked product was insoluble in water, but when it was immersed in a mixture of a 2% aqueous sodium hypochlorite solution and isopropanol (weight ratio 5:1), foaming and removal of the product from the substrate were observed.

### (Solvent solubility evaluation)

An amount of 0.5 mL of the solvent indicated in Table 1 or 2 was added to 2 mg of the degradable cross-linking agent of each of Examples 1 to 8 and Comparative Examples 1 and 2, and the mixture was stirred while the degree of dissolution was visually observed. When an undissolved portion remained after two-minute stirring at room temperature, the mixture was heated with stirring using a heat gun for two minutes and then visually observed again. The scoring was as follows: 3 points for those that completely dissolved at room temperature; 2 points for those in which an undissolved portion remained at room temperature but completely dissolved after heating; 1 point for those in which a slight amount of an undissolved portion remained after heating; and 0 points for those in which a large amount of an undissolved portion remained after heating. Tables 1 and 2 show the results.

**[Table 1]**

| | | Example 1 | Example 2 | Example 3 | Example 4 | Example 5 | Example 6 | Example 7 | Example 8 |
|---|---|---|---|---|---|---|---|---|---|
| Degradable cross-linking agent | | Formula (B1) | Formula (B2) | Formula (B3) | Formula (B4) | Formula (B5) | Formula (B6) | Formula (B7) | Formula (B8) |
| Solvent species | Isopropanol | 0 | 3 | 3 | 3 | 1 | 3 | 2 | 2 |
| | Methanol | 3 | 3 | 3 | 3 | 3 | 3 | 2 | 3 |
| | Acetone | 0 | 3 | 1 | 3 | 0 | 3 | 0 | 2 |
| | N-methylpyrrolidone | 2 | 3 | 3 | 3 | 3 | 3 | 3 | 3 |

**[Table 2]**

| | | Comparative Example 1 | Comparative Example 2 |
|---|---|---|---|
| Degradable cross-linking agent | | Formula (A1) | Formula (A2) |
| Solvent species | Isopropanol | 0 | 0 |
| | Methanol | 0 | 1 |
| | Acetone | 0 | 0 |
| | N-methylpyrrolidone | 0 | 2 |

The compounds of Comparative Examples 1 and 2 were poorly soluble in all the solvents. The compounds of Examples 1 to 8 exhibited high solubility in a plurality of the solvents. In particular, the compound of Example 1 exhibited higher solvent solubility than the compound of Comparative Example 2 having a similar structure.

## Claims

1. A degradable cross-linking agent, comprising a compound represented by the following formula (1): 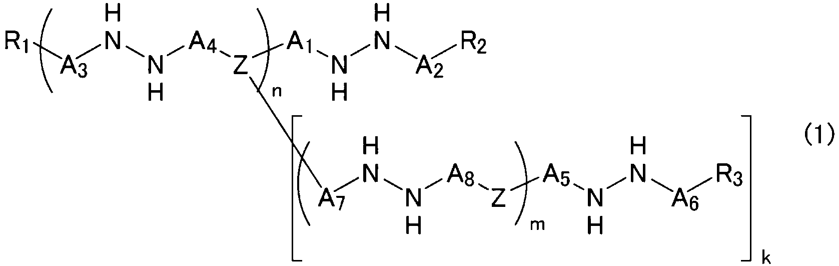 wherein
- n ≥ 0, k ≥ 0, and m ≥ 0;
- R₁, R₂, and R₃ each independently contain, at its terminal, at least one reactive functional group selected from the group consisting of a hydroxyl group, an amino group, a hydrazide group, a thiol group, an isoprenyl group, a crotonamide group, a crotonate group, a carboxylic acid, an acid anhydride group, a vinyl group, an allyl group, an acrylate group, a methacrylate group, an acrylamide group, a methacrylamide group, a hydroxysilyl group, an epoxy group, an oxetane group, an oxazoline group, an isocyanate group, a carbodiimide group, a methylol group, a silanol group, and an alkoxysilyl group, and also contain a single bond, a group containing a siloxane structure, or a hydrocarbon group optionally containing a substituent or a heteroatom;
- A₁ to A₈ each independently represent a carbonyl group or a single bond, at least one of A₁ and A₂ is a carbonyl group, at least one of A₃ and A₄ is a carbonyl group, at least one of A₅ and A₆ is a carbonyl group, and at least one of A₇ and A₈ is a carbonyl group; and
- each Z independently represents a group containing a siloxane structure or a hydrocarbon group optionally containing a heteroatom, and
wherein
(a) when n = 0, R₁ and R₂ are different;
(b) when n ≥ 1 and k = 0,
at least one of the following conditions is satisfied:
(b-1) R₁ and R₂ are different, and
(b-2) there is at least one Z having an asymmetric structure; and
(c) when n ≥ 1 and k ≥ 1,
at least one of the following conditions is satisfied:
(c-1) at least one of R₁, R₂, and R₃ is different, and
(c-2) there is at least one Z having an asymmetric structure.

2. The degradable cross-linking agent according to claim 1,
wherein R₁, R₂, and R₃ are different from each other.

3. The degradable cross-linking agent according to claim 1 or 2,
wherein the reactive functional groups in R₁, R₂, and R₃ are the same.

4. The degradable cross-linking agent according to any one of claims 1 to 3,
wherein n ≥ 1, there is at least one Z having an asymmetric structure, and R₁, R₂, and R₃ are the same.

5. The degradable cross-linking agent according to any one of claims 1 to 3,
wherein n ≥ 1, and each Z has an asymmetric structure.

6. The degradable cross-linking agent according to any one of claims 1 to 3,
wherein n ≥ 1, each Z has a symmetric structure, and the reactive functional groups in R₁, R₂, and R₃ are the same.

7. The degradable cross-linking agent according to any one of claims 1 to 6,
wherein the reactive functional groups in R₁, R₂, and R₃ are classified into mutually different classification groups selected from the following classification groups (A) to (O):
(A) a hydroxyl group;
(B) an amino group, a hydrazide group;
(C) a thiol group;
(D) an isoprenyl group, a crotonamide group, a crotonate group;
(E) a carboxylic acid;
(F) an acid anhydride group;
(G) a vinyl group, an allyl group;
(H) an acrylate group, a methacrylate group, an acrylamide group, a methacrylamide group;
(I) a hydroxysilyl group;
(J) an epoxy group, an oxetane group;
(K) an oxazoline group;
(L) an isocyanate group;
(M) a carbodiimide group;
(N) a methylol group; and
(O) a silanol group, an alkoxysilyl group.

8. The degradable cross-linking agent according to any one of claims 1 to 7,
wherein the reactive functional groups in R₁, R₂, and R₃ are each classified into any one of the following classification groups (A) to (O), and at least two of the reactive functional groups in R₁, R₂, and R₃ are classified into the same classification group:
(A) a hydroxyl group;
(B) an amino group, a hydrazide group;
(C) a thiol group;
(D) an isoprenyl group, a crotonamide group, a crotonate group;
(E) a carboxylic acid;
(F) an acid anhydride group;
(G) a vinyl group, an allyl group;
(H) an acrylate group, a methacrylate group, an acrylamide group, a methacrylamide group;
(I) a hydroxysilyl group;
(J) an epoxy group, an oxetane group;
(K) an oxazoline group;
(L) an isocyanate group;
(M) a carbodiimide group;
(N) a methylol group; and
(O) a silanol group, an alkoxysilyl group.

9. The degradable cross-linking agent according to any one of claims 1 to 8,
wherein the degradable cross-linking agent is liquid at 30°C to 60°C.

10. A composition, comprising:
the degradable cross-linking agent according to any one of claims 1 to 9, and
at least one selected from the group consisting of a curable resin, a polymerization initiator, and a solvent.

11. A degradable cross-linked product, formed from the composition according to claim 10.

12. The degradable cross-linked product according to claim 11,
wherein the degradable cross-linked product is degradable with an oxidizing agent.

13. A method for degrading a degradable cross-linked product, comprising bringing the degradable cross-linked product according to claim 11 or 12 into contact with an aqueous solution containing an oxidizing agent at 100°C or lower.
